# EUROPEAN PATENT SPECIFICATION

(11) **EP 0 569 710 B1**
(45) Date of publication and mention of the grant of the patent: **09.07.1997**
(21) Application number: 93105889.5
(22) Date of filing: 08.04.1993
(51) Int. Cl.: B60C 17/04, B60C 17/06

(54) **Improved safety wheel having an inner spare wheel**
Verbessertes Sicherheitsrad mit einem inneren Ersatzrad
Roue de sécurité contenant une roue de secours à son intérieur

(30) Priority: 10.04.1992 US 866426
(43) Date of publication of application: 18.11.1993
(73) Proprietor: Lin, Yng-Lang, Taipei (TW)
(72) Inventor: Lin, Yng-Lang, Taipei (TW)
(74) Representative: Lewald, Dietrich, Dipl.-Ing.

(56) References cited:
- EP-A- 0 490 585
- FR-A- 2 040 045
- FR-A- 2 348 069
- FR-A- 2 579 142
- US-A- 4 031 940
- US-A- 4 077 453
- US-A- 4 173 243
- US-A- 4 212 339

## Description

The present invention relates to an improvement of a construction of a safety wheel, particularly to an improved safety wheel having an inner spare wheel. The safety wheel has an inner subsidiary ring being fixed at a wheel rim of the safety wheel coaxially with the wheel rim and being located inside a tire of the safety wheel to thereby replace the tire when the tire is flat.

As far as I know, most of the previous safety wheels can not be put into practice, as they have many defects in their construction.

The present invention provides an improved safety wheel with many features to make the safety wheel useful. The features of the present invention will be mentioned below.

The present invention relates to an improvement of the construction of a safety wheel, more particularly to an improved safety wheel having an inner spare wheel. The safety wheel has an inner subsidiary ring fixed at the wheel rim of the safety wheel coaxially with the wheel rim and being located inside a tire of the safety wheel to thereby replace the tire when the tire is flat.

### BRIEF DESCRIPTION OF THE DRAWINGS

FIG. 1 is a fragmentary sectional side view of the safety wheel of the present invention.

FIG. 2 is a fragmentary plain side view of each of arc hollow members connected together to form the inner spare wheel of the safety wheel of the present invention.

FIG. 3 is a plain side view of a circumference of the inner spare wheel being divided into three segments in advance then connected together to form one ring.

FIG. 4 is a fragmentary sectional plain side view of an arc container storing a cooling liquid of the cooling device of the safety wheel of the present invention.

FIG. 5 is a fragmentary sectional plain side view of a circular metal sheet which is used to make the plate member of the wheel rim of the safety wheel via a pressing machine.

FIG. 6 is a fragmentary side view of an arc gasket having an arc groove on its circumference.

FIG. 7 is an enlarged frangmentary side view of each of segments which are connected together to form the spare wheel of the present invention.

FIG. 8 is an enlarged sectional plain side view of the arc container storing the cooling liquid of the cooling device of the safety wheel of the present invention.

FIG. 9 is a sectional side view of a plug having a plastic cover which will be softened/melted automatically when the tire is flat.

FIG. 10 is a fragmentary sectional side view of a wheel cover and a warning device of the present invention. The warning device is mounted on the wheel cover to provide a warning signal for the driver when the air in the tire is insufficient.

### DESCRIPTION OF THE PREFERRED EMBODIMENT

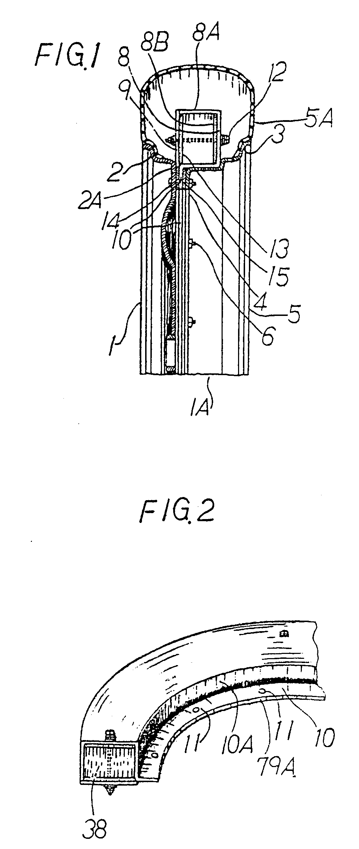

The improved safety wheel of the present invention as shown in FIG. 1, comprises an assembled wheel rim 1A, an inner spare wheel, which is namely an inner subsidiary ring 8A fixed at the wheel rim 1A coaxially with the wheel rim 1A and located inside the tire 5A.

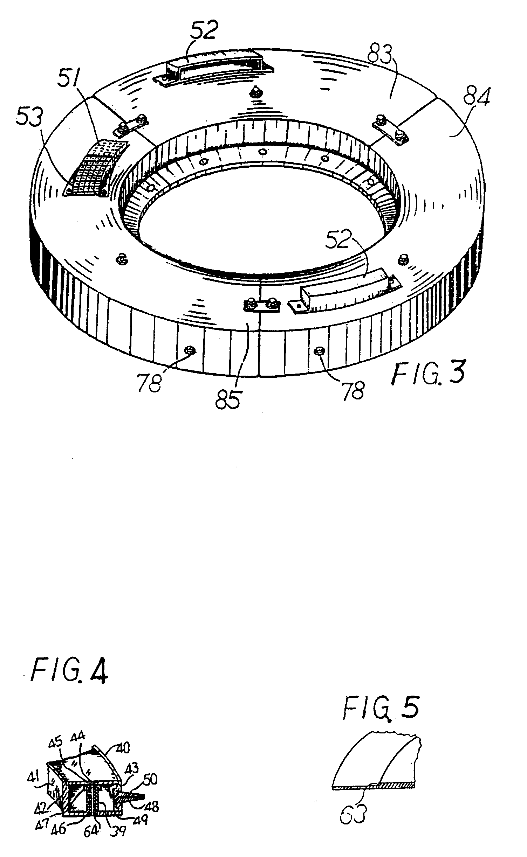

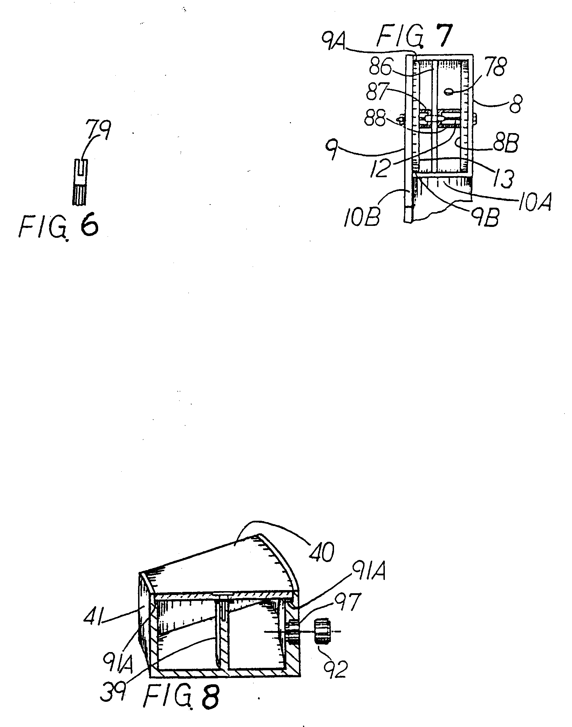

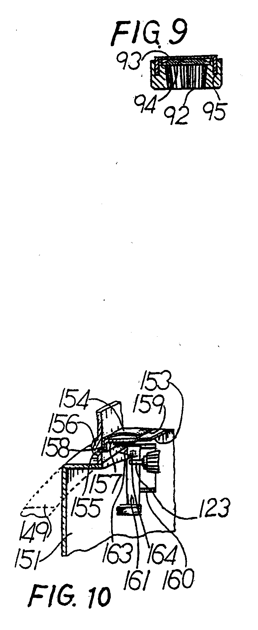

The improved safety wheel of the present invention comprises several features will be described as belows:
( a )
   Each of the segments 83,84,85 of the circumference of the spare wheel as shown in FIG. 3 connected together to form the spare wheel, comprises an arc trough 8 ( FIGs.1 and 7 ) having at least three sides and an arc cover 9 ( FIGs. 1 and 7 ). The arc trough 8 and the arc cover 9 are merged and connected together to form an arc hollow member as shown in FIGs. 2 and 7 . The mouth of the arc trough 8 is at its side portion when its outside arc is up.
( b )
   The arc cover 9 has a reinforcing convex portion 13 ( FIGs. 1 and 7 ) for inlaying in the mouth of the arc trough 8 to support the upper and lower arc sides of the trough mouth by the upper and lower ends 9A, 9B ( FIG. 7 ) of the arc cover 9.
( c )
   The arc trough 8 has several reinforcing convex portions 8B ( FIGs.1 and 7 ) on its trough bottom for strengthening its supporting force.
( d )
   The arc trough 8 has a supporter 86 ( FIG. 7 ) inside its trough for supporting its upper and lower arc sides, to thereby strengthen a supporting force of the arc trough. The supporter 86 is removably attached to the inside of the arc trough 8 by two withstanding members 87, 88 ( FIG. 7 ) and the bolt 12 so as to enable each of the segments 83, 84, 85 ( FIG. 7 ) to be made easily.
   As the spare wheel of the present invention has the features ( a ), ( b ), ( c ) and ( d ) as mentioned above, it can bear and support a vehicle weight; furthermore, its width is very narrow and thickness is very thin so that its weight is very light. Therefore the weight of the safety wheel can be greatly reduced.
   However, in prior art, the spare wheels are formed without having the features of ( a ), ( b ), ( c ) and ( d ) of the present invention as mentioned above, so for bearing and supporting the weight of the vehicle, the construction must be made of a very wide and very thick steel. This will increase the weight of the wheel.
( e )
   The arc trough 8 further includes a flange 10 ( FIGs. 1 and 2 ) extending from its inner arc and formed aside from its inner arc 10A. The flange 10 is used to be connected between the bottom of the plate member 1 ( FIG. 1 ) and the annular member 5 ( FIG. 1 ) to thereby fix the spare wheel at the wheel rim 1A coaxially with the wheel rim and to make the spare wheel locate at a center of a hollow portion which is namely an air chamber of the tire and to make the safety wheel more balanced when turning ( the plate member 1 is merged and combined together to assemble and form the wheel rim 1A of the safety wheel ).
   As prior art space wheel has not a flange which is placed aside as that of the inward flange 10 of the present invention, it can not be located at the center of the hollow portion of the tire and can not make the safety wheel more balanced when turning. The flange 10 of the present invention has apertures 11 providing for extending through bolts 6. The flange 10 includes a replacement of an extending portion 10B ( FIG.7 ) extending from the arc cover 9 ( FIG. 7 ).
( f )
   The two arc gaskets 14, 15 ( FIG. 1 ) are respectively connected among the plate 1, the flange 10 and the annular member 5 and are preventing the inner air of the tire from leaking and are made to be a common body to be one gasket like an arc groove 79 as shown in FIG. 6, then to provide the flange 10 to insert thereto and to be connected between the plate 1 and the annular member 5 , to thereby seal the inner arc 79A of the inward flange 10 by a bottom of the arc groove 79 to further prevent leakage. As the prior art safety wheel has no gasket like the gasket having the arc gasket 79 of the present invention so it has no bottom as the bottom of the groove 79 and can not seal the inward edge of its inward flange.
( g )
   An annular step portion 63 ( FIG. 5 ) located at a marginal portions of the flange 2 ( FIG. 1 ) and the bottom 2A ( FIG. 1 ) of the plate member 1 of the wheel rim 1A of the safety wheel makes the thickness of the flange 2 of the plate member thinner than that of the bottom 2A of the plate member so as to reduce the weight of the safety wheel when the plate member is made by a pressing machine. As the prior art spare wheel has no such an annular step portion like the annular step portion 63 of the present invention, its weight can not be reduced.
( h )
   A retrieving device 51 or 52 ( FIG. 3 ) retrieving and circulating the liquid cooling article ( for example water ) is used for reducing an inner temperature of the tire when the tire is flat and discharging from the cooling device of the safety wheel of the present invention, thereby reducing the liquid cooling article to flow out to the outside of the tire when the tire is blown out. The retrieving device according to the present invention comprises an absorbing article 51 ( FIG. 3 ) capable of absorbing water ( for example a cottons or cotton goods 51 ) or a dipping device 52 ( FIG. 3 ) which is dipping the cooling liquid and is shaped like an arc rubber trough mounted on two sides of each of the arc hollow member as shown in FIG. 2 or 7, to thereby absorb or dip the cooling liquid discharging from the cooling device so as to reduce the flow of cooling liquid to the outside of the tire when the tire is blown out. The absorbing article is covered by a web or a cover having small aperture 53 ( FIG. 3 ). As the prior art safety wheel has no the retrieving device as the present invention, it can not reduce the flow of cooling liquid to the outside of the tire when the tire is blown out.
( i )
   The container 38 (FIG. 2 ) as shown in FIGs. 4 and 8, used for storing the cooling liquid of the cooling device is formed by an arc trough 41 ( FIG. 4 ) having an inner step portions 42, 43 on its inside upper periphery, an arc cover 40 ( FIG. 4 ) covering the arc trough 41 and a gasket 91A ( FIG. 8 ) located between the arc trough 41 and the arc cover 40 which are connected together to form an arc container. The arc trough 41 has several hollow supporting pillars 39 ( FIG. 4 ) inside its trough for supporting the arc cover 40 to thereby prevent the arc cover from subsiding when the arc cover is bolted via the bolts 12 ( FIG. 1 ). The arc cover 40 has several holes 44 ( FIG. 4 ) having inner step portion 45 ( FIG. 4 ) respectively symmetrical with the hollow portion of the hollow supporting pillar 39 so as to provide the bolts 12 to insert thereto. The circumference of the container has several apertures, namely several exits 97 allowing the liquid cooling article to discharge. Each of the several exits 97 (FIG. 8 ) is tucked via a cone plug 48 ( FIG. 4 ) having a head 49 ( FIG. 4 ) and being tucked out from inside of the container. The cone plug 48 is near an inner surface of the tire and is automatically seceding toward the inside of the container and is automatically seceding from the each of exit when the tire is flat. Each cone plug 48 is easily seceding, due to a herd short rod 50 ( FIG. 4 ) inserted into the hollow portion of each cone plug 48. The hollow portion 46 of each of the hollow supporting pillars 39 has a short pipe 64 for strengthening a firmness of each of the hollow supporting pillars 39. An upper end of each of the hollow supporting pillars 39 has a gasket 47 ( FIG. 4 ) having a central aperture which allows each of the bolts 12 to insert thereto and to prevent the cooling liquid from permeating to the hollow portion of the hollow supporting pillar 39. The cone plug 48 may be replaced by an automatic softening/melting plug as shown in FIG. 9 when the tire is flat and its inner temperature is attained. The automatic softening/melting plug ( FIG. 9 ) comprises a hollow rubber plug 92, a plastic cover 93 covering on an exit of the hollow rubber plug 92 and a rubber cover 94 beneath the plastic cover 93 which are for separating the plastic cover 93 and the cooling liquid and for being compressed via the plastic cover 93, to thereby enalbe the plastic cover to quickly break when the plastic cover 93 is softening. The plastic cover 93 is cover on the exit of the hollow rubber 92 by the circumference 95 of a trough of the plastic 93 to insert a groove which is on a thickness of the hollow rubber plug 92. A container of a colling device of the prior art safety wheel has no arc container of the present invention, especially has no means to merge and combine the arc trough 41, the arc cover 40 ( FIG. 4 ) and the gasket 91A ( FIG. 8 ) so its actual practice will be difficult. The upper arc side of the arc hollow member has some apertures 78 ( FIG. 3 ) respectively symmetrical with the several exits 97; and
( j )
   A warning device can warn a driver when the tire has low air pressure to replenish air to the tire and so to avoid using the spare wheel.

The warning device comprises at least one bell 160 ( FIG. 10 ) and a spring piece 161 beating the bell 160, which are mounted on a wheel cover 151 of a wheel. The spring piece 161 has only its first end 162 fixed on the wheel cover 151, its second end 163 being not fixed, and is toward an intake 149 which is designed on the wheel cover 151 so as to be pushed and to beat the bell 160 via a wind-force which is entering from the intake 149. The second end 163 of the spring piece 161 has a metallic ball-face 164 so as to increase the bell's sound when the spring piece 161 is beating the bell 160. The second end 161 is clamped by an U-shaped clamp 123 mounted on a valve which is controlled by the air pressure of the tire when the tire is of having deficient air attaining to some extent. One side symmetrical with the bell 160 and without being mounted on the bell of the wheel cover 151 is installed a balancer for balancing with the bell 160 so as to make the safety wheel balancing when turning. As the prior art safety wheel has no warning device of the present invention so it can not warn the driver to replenish air to the tire and can not avoid using the spare wheel when the tire is losing air pressure but is not having a quick leakage.

## Claims

1. A safety wheel comprising an inner spare wheel, which is namely an inner subsidiary ring, fixed at its wheel rim coaxially with said wheel rim and inside its tire, characterized in that
each of arc members (83), (84), (85) connected together to form said spare wheel is composed of an arc like trough (8), having at least three sides with its trough mouth located at its side portion, and with which an arc like cover (9) is combined to form an arc like hollow member (8A);
said arc like hollow member (8A) having a flange (10) extending from its inner arc portion (10A) towards the center of said wheel rim, comprising a plurality of apertures (11) to allow a plurality of bolts respectively to extend through and to connect said each of arc member between the plate member (1) and an annular member (5) which are combined together to form said wheel rim (1A), thereby fixing said spare wheel coaxially with said wheel rim (1A).

2. The safety wheel as claimed in claim 1 wherein said arc like cover (9) further comprises a subsidiary convex portion (13) for inlaying in said trough mouth of said arc like trough (8) to support the upper and the lower arc sides of said trough mouth by the upper end (9A) and the lower end (9B) of said arc like cover (9) so as to strengthen the supporting force of said arc like trough (8).

3. The safety wheel as claimed in claim 1 wherein said arc like trough (8) further comprising a plurality of subsidiary convex portions (8B) on its trough bottom to strengthen its supporting force.

4. The safety wheel as claimed in claim 1 further comprising a supporter means (86) inside said hollow member (8A) for supporting the upper and the lower arc side of said arc like trough (8), to thereby strengthen the supporting force of said arc like trough (8).

5. The safety wheel as claimed in claim 1 wherein a periphery of the member which is used to make the plate member (1) which is combined to form said wheel rim (1A) with the annular member (5) has an annular stepped portion (63) so as to not only easily make the flange (2) of said plate member via a pressing machine but also to enable to reduce the weight of said safety wheel.

6. The safety wheel as claimed in claims 1 to 5 further comprising a retrieving device (51) or (52) to retrieve and circulate the cooling liquid which is used for reducing the inner temperature of said tire when said tire is flat and is discharged from a cooling device of said safety wheel, to thereby reduce the flow of said cooling liquid to the outside of said tire when said tire is blown out.

7. The safety wheel as claimed in claim 6 further comprising:
an arc like container storing said cooling liquid
said arc like container composed of an arc like trough (41), an arc like cover (40) covering said arc like trough (41) and an arc like frame-shaped gasket (91A) located between said arc like trough (41) and said arc like cover (40) being combined to form an arc like container.

8. The safety wheel as claimed in claim 1 to 7 further comprising a warning device to warn said driver to replenish air to tire and to avoid using said spare wheel.

9. The safety wheel as claimed in claim 1 further comprising a gasket having an arc groove (79), said flange (10) being inserted thereto and then connected between said plate member (1) and said annular member (5) following said flange, to thereby seal the inner arc (79A) of said flange (10) by the bottom of said arc groove (79) and to prevent air from leaking.

10. The safety wheel as claimed in claim 1 wherein said flange (10) is located at one side of said inner arc of said arc like trough (8) so as to have said spare wheel located at the canter of the air chamber of said tire and to make said safety wheel to be more balanced when turning.

## Patentansprüche

1. Sicherheitsrad, umfassend ein inneres Ersatzrad, das im wesentlichen ein innerer Hilfsring ist, welcher an dessen Radfelge koaxial mit der Radfelge und innerhalb von dessen Reifen befestigt ist, dadurch gekennzeichnet, daß
jedes der Bogenelemente (83), (84), (85), die miteinander verbunden sind, um das Ersatzrad zu bilden, aus einer bogenförmigen Rinne (8) zusammengesetzt ist, die wenigstens drei Seiten mit deren Rinnenöffnung aufweist, welche an deren Seitenabschnitt angeordnet ist, und mit der eine bogenförmige Abdeckung (9) kombiniert ist, um ein bogenförmiges hohles Element (8A) zu bilden;
das bogenförmige hohle Element (8A) einen Flansch (10) aufweist, der sich von dem inneren Bogenabschnitt (10A) hin zur Mitte der Radfelge erstreckt, welcher eine vielzahl von Öffnungen (11) umfaßt, um einer Vielzahl von entsprechenden Schrauben zu gestatten, sich hindurch zu erstrecken und jedes der Bogenelemente zwischen dem Plattenelement (1) und einem Ringelement (5) zu verbinden, welche miteinander kombiniert sind, um die Radfelge (1A) zu bilden, wobei das Ersatzrad koaxial an der Radfelge (1A) befestigt ist.

2. Sicherheitsrad nach Anspruch 1, bei welchem die bogenförmige Abdeckung (9) weiterhin einen konvexen Hilfsabschnitt (13) zum Einlegen in die Rinnenöffnung der bogenförmigen Rinne (8) umfaßt, um die obere und untere Bogenseite der Rinnenöffnung durch das obere Ende (9A) und das untere Ende (9B) der bogenförmigen Abdeckung (9) abzustützen, um so die Stützkraft der bogenförmigen Rinne (8) zu verstärken.

3. Sicherheitsrad nach Anspruch 1, bei welchem die bogenförmige Rinne (8) weiterhin eine Vielzahl von konvexen Hilfsabschnitten (8B) an deren Rinnenboden umfaßt, um deren Stützkraft zu verstärken.

4. Sicherheitsrad nach Anspruch 1, weiterhin umfassend eine Stützeinrichtung (86) innerhalb des hohlen Elementes (8A) zum Abstützen der oberen und der unteren Bogenseite der bogenförmigen Rinne (8), um dabei die Abstützkraft der bogenförmigen Rinne (8) zu verstärken.

5. Sicherheitsrad nach Anspruch 1, bei welchem ein Außenumfang des Elementes, das verwendet ist, um das Plattenelement (1) zu bilden, welches kombiniert ist, um die Radfelge (1A) mit dem Ringelement (5) zu bilden, einen ringförmigen abgestuften Abschnitt (63) aufweist, um so den Flansch (2) des Plattenelementes nicht nur leicht mittels einer Preßmaschine herzustellen, sondern ebenso zu ermöglichen, das Gewicht des Sicherheitsrades zu vermindern.

6. Sicherheitsrad nach einem der Ansprüche 1 bis 5, weiterhin umfassend eine Wiederbeschaffungseinrichtung (51) oder (52), um die Kühlflüssigkeit wieder zu beschaffen und im Umlauf zu führen, die zur Reduzierung der Innentemperatur des Reifens verwendet ist, wenn der Reifen platt ist, und die aus einer Kühleinrichtung des Sicherheitsrades geliefert ist, um dabei die Strömung der Kühlflüssigkeit zu der Außenseite des Reifens hin zu vermindern, wenn der Reifen entleert ist.

7. Sicherheitsrad nach Anspruch 6, weiterhin umfassend einen bogenförmigen Behälter, der die Kühlflüssigkeit speichert, wobei der bogenförmige Behälter aus einer bogenförmigen Rinne (41), einer bogenförmigen Abdeckung (40), welche die bogenförmige Rinne (41) abdeckt, und einer bogenförmigen rahmengeformten Dichtung (91A), welche zwischen der bogenförmigen Rinne (41) und der bogenförmigen Abdeckung (40) angeordnet ist, kombiniert, um einen bogenförmigen Behälter zu bilden, zusammengesetzt ist.

8. Sicherheitsrad nach Anspruch 1 bis 7, weiterhin umfassend eine Warneinrichtung, um den Fahrer zu warnen, Luft in den Reifen nachzufüllen und um zu vermeiden, das Ersatzrad zu verwenden.

9. Sicherheitsrad nach Anspruch 1, weiterhin umfassend eine Dichtung, die eine Bogenausnehmung (79) aufweist, wobei der Flansch (10) darin eingebracht ist und dann zwischen dem Plattenelement (1) und dem Ringelement (5), welches dem Flansch folgt, verbunden ist, um dabei den inneren Bogen (79A) des Flansches (10) durch den Boden der Bogenausnehmung (79) abzudichten und Luft abzuhalten, auszutreten.

10. Sicherheitsrad nach Anspruch 1, bei welchem der Flansch (10) auf einer Seite des inneren Bogens der bogenförmigen Rinne (8) angeordnet ist, um so ein Ersatzrad, das in der Mitte der Luftkammer des Reifens angeordnet ist, aufzuweisen und um das Sicherheitsrad, das beim Drehen besser ausbalanciert ist, herzustellen.

## Revendications

1. Roue de sécurité comprenant une roue de secours intérieure qui est, proprement dit, une couronne auxiliaire intérieure, fixée au niveau de la jante de façon coaxiale à ladite jante et à l'intérieur du pneu, caractérisée en ce que
chacun des éléments en arc (83), (84), (85), reliés ensemble pour former ladite roue de secours, est constitué d'une rigole en forme d'arc (8), ayant au moins trois côtés, l'ouverture de la rigole étant située au niveau de sa partie latérale, et avec laquelle un couvercle en forme d'arc (9) est combiné pour former un élément creux en forme d'arc (8A) ;
lesdits éléments creux en forme d'arc (8A) ayant une bride (10) s'étendant à partir de leur partie en arc intérieure (10A) vers le centre de ladite jante, comprenant une pluralité d'ouvertures (11) pour permettre à une pluralité de boulons de s'étendre respectivement à travers et de relier chacun des éléments en arc entre l'élément formant plaque (1) et un élément annulaire (5) qui sont combinés ensemble pour former ladite jante (1A), fixant de ce fait ladite roue de secours de façon coaxiale à ladite jante (1A).

2. Roue de sécurité selon la revendication 1, dans laquelle ledit couvercle en forme d'arc (9) comprend de plus une partie convexe auxiliaire (13) pour rentrer à l'intérieur de ladite ouverture de ladite rigole en forme d'arc (8) pour supporter les côtés en arc supérieur et inférieur de ladite ouverture de rigole par l'extrémité supérieure (9A) et l'extrémité inférieure (9B) dudit couvercle en forme d'arc (9) de façon à renforcer la force de support de ladite rigole en forme d'arc (8).

3. Roue de sécurité selon la revendication 1, dans laquelle ladite rigole en forme d'arc (8) comprend de plus une pluralité de parties convexes auxiliaires (8B) sur le fond de la rigole pour renforcer sa force de support.

4. Roue de sécurité selon la revendication 1, comprenant de plus des moyens de support (86) à l'intérieur dudit élément creux (8A) pour supporter les côtés en arc supérieur et inférieur de ladite rigole en forme d'arc (8), pour renforcer de ce fait la force de support de ladite rigole en forme d'arc (8).

5. Roue de sécurité selon la revendication 1, dans laquelle une périphérie de l'élément qui est utilisé pour fabriquer l'élément formant plaque (1), qui est combiné à l'élément annulaire (5) pour former ladite jante (1A), possède une partie annulaire étagée (63) de façon à non seulement fabriquer aisément la bride (2) dudit élément formant plaque par l'intermédiaire d'une presse mais également à permettre de réduire le poids de ladite roue de sécurité.

6. Roue de sécurité selon les revendications 1 à 5, comprenant de plus un dispositif de récupération (51) ou (52) pour récupérer et mettre en circulation le liquide de refroidissement qui est utilisé pour réduire la température intérieure dudit pneu quand ledit pneu est à plat et qui est évacué à partir d'un dispositif de refroidissement de ladite roue de sécurité, pour réduire de ce fait l'écoulement dudit liquide de refroidissement à l'extérieur dudit pneu quand ledit pneu est crevé.

7. Roue de sécurité selon la revendication 6, comprenant de plus :
un conteneur en forme d'arc stockant ledit liquide de refroidissement ;
ledit conteneur en forme d'arc étant constitué d'une rigole en forme d'arc (41), d'un couvercle en forme d'arc (40) recouvrant ladite rigole en forme d'arc (41) et un joint d'étanchéité en forme de cadre semblable à un arc (91A) situé entre ladite rigole en forme d'arc (41) et ledit couvercle en forme d'arc (40), combinés pour former un conteneur en forme d'arc.

8. Roue de sécurité selon les revendications 1 à 7, comprenant de plus un dispositif d'alerte avertissant le conducteur qu'il faut refaire le plein d'air du pneu et éviter d'utiliser ladite roue de secours.

9. Roue de sécurité selon la revendication 1, comprenant de plus un joint d'étanchéité ayant une rainure en arc (79), ladite bride (10) étant insérée dans cette dernière et ensuite reliée entre ledit élément formant plaque (1) et ledit élément annulaire (5) suivant ladite bride, pour rendre ainsi étanche l'arc intérieur (79A) de ladite bride (10) par le fond de ladite rainure en arc (79) et pour empêcher l'air de s'échapper.

10. Roue de sécurité selon la revendication 1, dans laquelle ladite bride (10) est située au niveau d'un côté particulier dudit arc intérieur de ladite rigole en forme d'arc (8) de façon à avoir ladite roue de secours située au niveau du centre de la chambre à air dudit pneu et à rendre ladite roue de secours plus équilibrée lors de la rotation.
